# EUROPÄISCHE PATENTSCHRIFT

(11) **EP 2 166 206 B1**
(45) Veröffentlichungstag und Bekanntmachung des Hinweises auf die Patenterteilung: **23.01.2013**
(21) Anmeldenummer: 09009535.7
(22) Anmeldetag: 23.07.2009
(51) Int. Cl.: F01N 3/20, F01N 3/36, B01D 53/90, B01D 53/94

(54) **Dosiervorrichtung zur Zudosierung eines Reduktionsmittels, insbesondere für eine selektive katalytische Reduktion, in einen Abgasstrom einer Brennkraftmaschine**
Metering device for metering a reduction agent, in particular for a selective catalytic reduction, into an exhaust gas flow of a combustion engine
Dispositif de dosage destiné au dosage d'un moyen de réduction, notamment pour une réduction catalytique sélective, dans un flux de gaz d'échappement d'un moteur à combustion interne

(30) Priorität: 23.09.2008 DE 102008048426
(43) Veröffentlichungstag der Anmeldung: 24.03.2010
(73) Patentinhaber: MAN Truck & Bus AG, 80995 München (DE)
(72) Erfinder: Döring, Andreas, 80339 München (DE)

(56) Entgegenhaltungen:
- EP-A1- 1 676 986
- WO-A1-2004/079171
- WO-A1-2009/068136
- WO-A1-2009/109423
- DE-A1- 10 342 003
- DE-A1- 10 348 800
- DE-A1-102006 023 145
- DE-A1-102008 012 972

## Beschreibung

Die Erfindung betrifft eine Dosiervorrichtung zur Zudosierung eines Reduktionsmittels, insbesondere für eine selektive katalytische Reduktion, in einen Abgasstrom einer Brennkraftmaschine, nach dem Oberbegriff des Anspruchs 1.

Es ist allgemein bekannt, zur Entfernung von Schadstoffen aus einem Abgas einer Verbrennungsanlage katalytische Reinigungsverfahren vorzusehen. Katalytische Reinigungsverfahren, bei denen ein Schadstoff als erster Reaktant mit einem zusätzlichen, in das Abgas eingebrachten Medium als zweitem Reaktanten reagiert, finden Verwendung bei sogenannten reduktionsmittelbetriebenen Abgasreinigungsanlagen.

Bei reduktionsmittelbetriebenen Abgasreinigungsanlagen handelt es sich bei dem in den Abgasraum einzubringende Medium meist um ein Reduktionsmittel, das einen oder mehrere Schadstoffe des Abgases reduziert. Beispielsweise ist es üblich, den Stickoxidanteil im Abstrom einer Brennkraftmaschine durch eine selektive katalytische Reduktion (SCR) zu verringern. Dazu wird dem Abgasstrom eine unmittelbar reduzierend wirkende Substanz, wie beispielsweise Ammoniak, oder ein Vorprodukt zugeführt, das erst im Abgas reduzierende Substanzen freisetzt. Als Vorprodukt kann beispielsweise Harnstoff, meist in Form einer Harnstoff-Wasser-Lösung, Ammoniumformiat o.ä. verwendet werden.

Die Zersetzung dieser Stoffe und damit die Freisetzung von Ammoniak ist beim SCR-Verfahren ausschlaggebend für die Einsetzbarkeit des Verfahrens.

(NH₂)₂CO+H₂O → 2NH₃+CO₂

Da beispielsweise die Zersetzung von Harnstoff nach obiger Gleichung in der Gasphase erst bei 450°C quantitativ gelingt, werden im Abgastrakt oft sogenannte Hydrolyse- oder Harnstoffzersetzungskatalysatoren (EP0487886B1 und EP0555746B1) eingesetzt, bei denen die Zersetzungstemperaturen auf ca. 170°C abgesenkt werden können. Sie beschleunigen die Hydrolyse der, bei der Harnstoffzersetzung durch Thermolyse freigesetzten, Isocyansäure zu NH₃ und CO₂.

(NH₂)₂CO → NH₃+HNCO

HNCO+H₂O → NH₃+CO₂

Als Aktivkomponenten kommen TiO₂ und/oder SiO₂ und/oder Al₂O₃ und/oder Zeolithe zum Einsatz. Diese Aktivkomponenten werden in Form einer Beschichtung auf einen keramischen oder metallischen, meist wabenförmigen, Katalysatorträger aufgebracht.

Wird kein Hydrolysekatalysator verwendet oder dieser überlastet, indem er z.B. bei zu geringen Temperaturen und/oder hohen Reduktionsmitteldosiermengen betrieben wird, so gelingt keine quantitative Hydrolyse der Isocyansäure. Besonders problematisch ist dies bei der Verwendung von wässriger Harnstofflösung, da durch die Verdampfung des Wassers dem Abgas zusätzlich Wärme entzogen und diese somit abgekühlt wird.

Gelingt dadurch keine quantitative Zersetzung des Harnstoffs in Ammoniak und Kohlendioxid bilden sich thermisch sehr stabile, feste, meist ringförmige und wasserunlösliche Nebenprodukte wie Melamin, Melanin und Cyanursäure. Diese Feststoffe lagern sich auf den Hydrolysekatalysatoren, den Harnstoffeinspritzdüsen und den Rohrleitungen ab, was bis zur kompletten Blockierung des Abgasstromes bzw. dem Ausfall des SCR- Systems führen kann.

Die Zersetzung dieser Stoffe gelingt erst oberhalb von 450°C - 500°C. Allerdings liegen die Abgastemperaturen moderner Motoren auf Grund ihrer hohen Wirkungsgrade üblicherweise unterhalb von 400°C. Dies hat zur Folge, dass eventuell gebildete Ablagerungen nicht wieder entfernt werden können.

Der gebildete Ammoniak (NH₃) ist bei der selektiven katalytischen Reduktion in der Lage, Stickstoffmonoxid (NO) und Stickstoffdioxid (NO₂) zu molekularem Stickstoff (N₂) zu reduzieren. Die selektive katalytische Reduktion findet üblicherweise an einem sogenannten SCR-Katalysator statt.

Neben der Freisetzung von Ammoniak im Abgasstrom stellt die Zuführung des zu zersetzenden Reduktionsmittels in den Abgasstrom mit Hilfe einer Zuführoder Dosiervorrichtung ein weiteres Problem bei der Anwendung des SCR-Verfahrens in Fahrzeugen dar. Speziell bei der Zuführung mit Hilfe einer am oder im Abgastrakt angebrachten Düse kann es bei hohen Temperaturen bereits innerhalb der Düse zur Zersetzung des Reduktionsmittels und zur Bildung der bereits oben beschriebenen festen Zersetzungsprodukte Melamin, Melanin und Cyanursäure kommen. Wandern diese Stoffe in die Düsenlöcher, führt dies zu deren Verstopfung und damit zum Ausfall des SCR- Systems. Gleiches gilt für den Fall, das das Reduktionsmittel in fester Form, beispielsweise über ein Loch oder einen Schlitz dem Abgastrakt zugeführt wird.

Um unerwünschte Schadstoffausstöße, insbesondere in Verbindung mit einem Kaltstart der Brennkraftmaschine, zu vermeiden, ist es notwendig, dass die Katalysatoren schnellstmöglich auf ihre Betriebstemperatur, insbesondere die sogenannte Anspringtemperatur, bei der 50% der Schadstoffe umgesetzt werden können, erhitzt werden. Dazu werden die Katalysatoren im Abgasstrang einer Brennkraftmaschine möglichst motornah angeordnet, was das schnelle Aufheizen und damit ein möglichst schnelles Anspringen des Katalysators begünstigt. Dementsprechend wird die in den Abgasstrom einragende Dosiervorrichtung von einem sehr heißen Abgasstrom umströmt, was zu einem starken Temperaturanstieg innerhalb der Zuführvorrichtung führt. Insbesondere bei Reduktionsmitteln die bei ihrer Zersetzung feste Nebenprodukte bilden können, wie z. B. Harnstoff oder einer wässrigen Harnstofflösung, besteht bei diesen hohen Temperaturen die erhöhte Gefahr einer Bildung von festen Nebenprodukten und damit des Verstopfens der Zuführvorrichtung, insbesondere durch thermisch sehr stabile, feste, meist ringförmige und wasserunlösliche Nebenprodukte, wie z. B. Melamin, Melanin und Cyanursäure.

Gleiches gilt analog für den Fall, dass das Reduktionsmittel in fester Form, beispielsweise über ein Loch oder einen Schlitz dem Abgastrakt zugeführt wird.

Um diese Problematik zu vermeiden, ist es aus der EP 0 558 452 B1 bereits bekannt, das Reduktionsmittel in einen Abgasstrom eines Abgasstrangs einer Brennkraftmaschine zusammen mit kühlender Druckluft einzudüsen, wobei die Eindüsung mittels einer Zweistoffdüse erfolgt und die Druckluft als Kühlmittel entlang der den Zudosierkanal des Reduktionsmittels ausbildenden Zuführleitung geführt wird. Die strömende Druckluft kühlt hierbei auch die in den Abgasstrang mündende Düse selbst.

Weiter ist es aus der WO 96/36797 bekannt, die Mischung von Luft und Reduktionsmittel in einer Vormischkammer vorzunehmen. Diese Vormischkammer ist über eine Leitung und eine Düse mit dem Abgasstrang so verbunden, dass die Vormischkammer nicht durch das heiße Abgas aufgeheizt wird. Außerdem soll die zugemischte Luft eine Aufheizung des Reduktionsmittels verhindern.

Aus der DE 299 24 992 U1 ist es zudem bekannt, eine Erwärmung des Reduktionsmittels in den Bereichen, die durch die Wärme des durch den Abgasstrang hindurchströmenden Abgases aufheizbar sind, dadurch zu verhindern, dass ein Umwälzkreislauf für das Reduktionsmittel vorgesehen ist. In diesen Umwälzkreislauf ist ein unmittelbar vor einer Austrittsöffnung der Dosiervorrichtung angeordneter Vorhalteraum für das Reduktionsmittel geschaltet, in den das Reduktionsmittel trotz seiner Nähe zum Abgasstrang durch eine ständige Umwälzung auf einer konstant niedrigen Temperatur gehalten werden soll.

Aus der DE 103 24 482 A1 ist weiter eine Dosiervorrichtung bekannt, bei der eine Kühlung des Einspritzventils dadurch erreicht werden soll, dass das Reduktionsmittel, insbesondere Kraftstoff, von einem kühleren Rücklauf abgezweigt wird.

In der EP 1 676 986 A1 ist eine Anordnung für die Reinigung der Abgase eines Motors beschrieben. Die Anordnung ist mit einem NOx-Reduktionskatalysator der im Auspuffrohr des Motors angeordnet ist ausgestattet, um das NOx reduktiv mit Hilfe von Ammoniak zu entfernen. Der Ammoniak wird dabei mittels einer wässrigen Harnstofflösung erzeugt, die mit einer Einspritzdüse auf einer Position stromauf des NOx-Reduktionskatalysators in das Abgas eingedüst wird. Eine Hydrolysekatalysator, der die Erzeugung des Ammoniak aus der wässrigen Harnstofflösung beschleunigt, ist in einer inneren Passage der Einspritzdüse angeordnet um Ablagerungen zu verhindern. Im Auspuffrohr zwischen der Einspritzdüse und dem NOx-Reduktionskatalysator können ein Diffusor und ein Hydrolysekatalysator angeordnet sein.

Die DE 103 48 800 A1 beschreibt ein Verfahren und ein System für die Verbesserung des Umwandlungswirkungsgrades eines stromab eines Diesel- oder sonstigen Magermotors angeschlossenen harnstoffbasierten SCR-Katalysators. Das System umfasst eine elektrisch beheizte Verdampfereinheit, in die eine Mischung von Reduktant und Luft eingespritzt wird. Die Mischung wird in der Einheit verdampft und vor ihrem Eintreten in den SCR-Katalysator in das Abgas eingeleitet. Das Einleiten von mit Luft vermischtem Reduktant in das Reduktantzuführsystem verhindert Lack- und Rußablagerungen auf dem im Inneren der Einheit untergebrachten beheizten Element und ebenso die Beschleunigung des Verdampfungsprozesses, womit Reaktionsverzögerungen des Systems reduziert werden und der Umwandlungswirkungsgrad der Vorrichtung verbessert wird. Das Reduktantzuführsystem wird durch Hinzufügen eines hydrolysierenden Katalysators und durch Isolieren der Reduktant- und Luftmischung vom Heizelement weiter verbessert.

In der DE 10 2006 023 145 A1 ist eine Vorrichtung zur Aufbereitung des Abgases einer Verbrennungskraftmaschine beschrieben, die einen Reduktionsmittellösungsverdampfer, einen mit dem Reduktionsmittellösungsverdampfer verbundenen Hydrolysekatalysator zur Hydrolyse von insbesondere Harnstoff zu Ammoniak und einen SCR-Katalysator zur selektiven katalytischen Reduktion von Stickoxiden aufweist. Der Reduktionsmittellösungsverdampfer enthält eine Verdampfereinheit, die eine wässrige Lösung mit mindestens einem Reduktionsmittelvorläufer verdampft, der SCR-Katalysator ist in der Abgasleitung angeordnet. Die Vorrichtung sieht vor, dass der Reduktionsmittellösungsverdampfer und der Hydrolysekatalysator innerhalb der Abgasleitung und mit dieser verbindbar ausgebildet sind. Die Vorrichtung erlaubt die Bereitstellung einer genügend großen Menge Reduktionsmittel für die selektive katalytische Reduktion von Stickoxiden im SCR-Katalysator, wobei gleichzeitig der Hydrolysekatalysator kleinvolumiger ausgeführt werden kann, da er nicht von Abgas durchströmt wird.

Die nicht vorveröffentlichte internationale Patentanmeldung WO 2009/109423 A1 gilt nach Art. 54(3) als Stand der Technik. Diese Schrift zeigt eine Dosiervorrichtung zur Zudosierung eines Reduktionsmittels, in einen Abgasstrom einer Brennkraftmaschine wobei innerhalb eines Zudosierkanals eine katalytisch aktive Oberfläche in Form eines Rohres aus Titan vorgesehen ist.

All diesen Systemen ist gemein, dass diese baulich besonders aufwändig sind, insbesondere aufwändige Verrohrungen in Verbindung mit zusätzlichen Pumpen sowie ein besonders ausgefeiltes Düsendesign erfordern. Mit derartigen Maßnahmen wird somit der Montage-, Konstruktions-und Wartungsaufwand in Verbindung mit einer Dosiervorrichtung erheblich erhöht.

Dementsprechend ist es Aufgabe der vorliegenden Erfindung, eine Zuführ- bzw. Dosiervorrichtung zur Zudosierung eines Reduktionsmittels, insbesondere für eine selektive katalytische Reduktion, in einen Abgasstrom einer Brennkraftmaschine zu schaffen, bei der auch in Verbindung mit höheren Temperaturen ein Verstopfen der Zuführ- bzw. Dosiervorrichtung insbesondere mit Reduktionsmittelzersetzungsprodukten zuverlässig und funktionssicher vermieden werden kann.

Diese Aufgabe wird gelöst mit den Merkmalen des Anspruchs 1. Vorteilhafte Ausgestaltungen sind Gegenstand der Unteransprüche.

Gemäß Anspruch 1 ist im Bereich eines Zudosierkanals einer erfindungsgemäßen Zuführ- bzw. Dosiervorrichtung eine katalytisch aktive Oberfläche für vorgegebene Stoffe, insbesondere für vorgegebene Reduktionsmittelzersetzungsprodukte, vorgesehen oder ausgebildet. Erfindungsgemäß ist vorgesehen, dass eine Kanalwand des Zudosierkanals und/oder wenigstens ein im Zudosierkanal angeordnetes Zwischenelement wenigstens in Teilbereichen eine katalytisch aktive Oberfläche aufweist. Die katalytisch aktive Oberfläche ist hierbei durch ein solches katalytisch aktives Material gebildet, das, in Verbindung mit gelösten Feststoffen als Reduktionsmittel bzw. Reduktionsmittelbestandteil, z. B. mit Harnstoff oder mit wässrigen Harnstofflösungen, die Selektivität zur Bildung nicht ringförmiger und/oder nicht fester, insbesondere gasförmiger, Reduktionsmittelzersetzungsprodukten im Vergleich zu ringförmigen und/oder festen Reduktionsmittelzersetzungsprodukten erhöht bzw. der Zersetzung der ringförmigen und/oder festen Reduktionsmittelzersetzungsprodukte dient. Unter festen Reduktionsmittelzersetzungsprodukten werden dabei insbesondere diejenigen Feststoffe verstanden, die z. B. Verstopfungen in Verbindung mit einer Düse oder Austrittsöffnungen von Zudosierkanälen verursachen können.

Im Zudosierkanal könnte grundsätzlich aber auch ein von einem Abgasstrom abgezweigter Teilstrom geführt sein, der zusammen mit einem in diesem Teilstrom eingebrachten Reduktionsmittel dann wieder in den Hauptabgsstrom zurückgeführt wird. Weiter können auch wenigstens Teilbereiche der Dosiervorrichtung, die nicht abgasberührt sind, mit einer katalytisch aktiven Oberfläche ausgebildet oder versehen sein.

Mit der erfindungsgemäßen Lösung, nämlich im Bereich des Zudosierkanals eine für vorgegebene Stoffe, insbesondere eine für vorgegebene Reduktionsmittelzersetzungsprodukte, selektive katalytisch aktive Oberfläche vorzusehen oder auszubilden, kann somit auch in Verbindung mit hohen Abgastemperaturen und hohen Temperaturen im Bereich der Dosiervorrichtung zuverlässig und funktionssicher die Verstopfung der Dosiervorrichtung mittels sich bildender Feststoffe bzw. Reduktionsmittelzersetzungsprodukte, wie z. B. Melamin, Melanin und Cyanursäure, vermieden werden, da durch den Einsatz eines auf die jeweiligen Verhältnisse abgestimmten katalytisch aktiven Materials als katalytisch aktiver Oberfläche eine z. B. Zersetzung dieser evtl. anfallenden Feststoffe bewirkt oder zumindest begünstigt wird oder bereits deren Bildung verhindert wird.

Um ein Verstopfen der Dosiervorrichtung, insbesondere bei sich verengenden Querschnitt des Zudosierkanals, sicher zu vermeiden, ist stromauf der wenigstens einen Austrittsöffnung des Zudosierkanals wenigstens ein Filterelement als Zwischenelement vorgesehen, das einen vorgegebenen Abstand zu der wenigstens einen Auslassöffnung des Zudosierkanals aufweist. Wie bereits zuvor ausgeführt, ist dieses als Filterelement ausgebildete Zwischenelement das die katalytisch aktive Oberfläche im Bereich des Zudosierkanals ausbildende Element. Zusätzlich dazu weist hier dann auch eine Zudosierkanalwand eine katalytisch aktive Oberfläche auf. Neben der Reduzierung der Verstopfungsgefahr der Dosiervorrichtung, insbesondere ihrer Austrittsöffnung, kann mit einem derartigen Filterelement vorteilhaft gleichzeitig die Verweilzeit und die aktive Oberfläche zur Zersetzung der Feststoffe bzw. Reduktionsmittelzersetzungsprodukte erhöht werden, wodurch sich die Prozesssicherheit nochmals wesentlich erhöhen lässt.

Als Aktivkomponenten bieten sich hier die Elemente der Platinmetallgruppe und/oder Cer und/oder Vanadium und/oder Wolfram und/oder Titan und/oder Silizium und/oder Aluminium und/oder deren Oxide und/oder Zeolithe an.

Die Dosiervorrichtung ist bevorzugt durch ein Dosierrohr gebildet, das im montierten Zustand wenigstens mit einem Teilbereich in den Abgasstrom einragt, wobei in Verbindung mit einem Dosierrohr dessen Rohrinnenwand dann die Kanalwand und damit den Zudosierkanal ausbildet. Besonders bevorzugt ist hierbei eine Ausgestaltung, bei der der Zudosierkanal als Düse ausgelegt und ausgebildet ist, um das Reduktionsmittel feinstverteilt in den Abgasstrom zudüsen zu können.

Gemäß einer besonders bevorzugten Weiterbildung der vorliegenden Erfindung ist zudem vorgesehen, dass zusätzlich zu der im Inneren des Zudosierkanals ausgebildeten katalytisch aktiven Oberfläche auch in Außenwandbereichen der bevorzugt als Dosierrohr ausgebildeten Dosiervorrichtung eine katalytisch aktive Oberfläche vorgesehen bzw. ausgebildet ist, und zwar insbesondere in denjenigen Außenwandbereichen, die im montierten Zustand der Dosiervorrichtung in den Abgasstrom einragen. Die katalytisch aktive Oberfläche ist hierbei z. B. analog zur innenseitigen Ausgestaltung wieder für vorgegebene Stoffe, insbesondere für vorgegebene Reduktionsmittelzersetzungsprodukte, selektiv. Dadurch kann die Dosiervorrichtung auch im Außenbereich z. B. die Ablagerung von Feststoffen auf dieser selbst verhindern bzw. einen Beitrag dazu leisten, im Abgasstrom vorhandene Feststoffe zu zersetzen und damit deren Anteil zu reduzieren, was somit das Zusetzen von z. B. Hydrolysekatalysatoren und die Ablagerung derartiger Feststoffe im Abgastrakt zuverlässig zu vermeiden hilft.

Die Aktivkomponenten bzw. die katalytisch aktive Oberfläche kann in Form einer Beschichtung aufgebracht werden. Im einfachsten Fall kann dies mithilfe eines Washcoats erfolgen. Da die Adhäsion zwischen einer derart aufgebrachten Beschichtung und dem Material der Dosiervorrichtung allerdings gering ist, kann es zum Abplatzen der Beschichtung und in deren Folge zum Verstopfen der Dosiervorrichtung kommen. Dies ist insbesondere bei Düsen mit feinen Düsenlöchern problematisch. Um die Adhäsion zu verbessern, kann die aktive Schicht in diesem Fall auch durch Platinieren, Eloxieren, Imprägnieren und/oder Bedampfen hergestellt werden. Für den Fall, dass dies immer noch nicht ausreichend sein sollte, um eine zuverlässige Anhaftung der Aktivkomponenten zu erzielen, ist es auch denkbar, die Dosiervorrichtung teilweise oder komplett aus einem katalytisch aktiven Material herzustellen, wodurch ggf. auf eine Beschichtung verzichtet werden kann. Hierfür sind auch Legierungen, auch unterschiedlicher Aktivkomponenten, mit z. B. Aluminiumtitanat oder titanhaltiger Stähle ebenso denkbar, wie reine Stoffe, z. B. Titan.

Die erfindungsgemäße Dosiervorrichtung wird bevorzugt in ein Abgassystem eingesetzt, bei dem stromab der Dosiervorrichtung ein SCR-Katalysator und ggf. ein Hydrolysekatalysator und/oder ein Partikelfilter angebracht ist.

Die Erfindung wird nachfolgend anhand einer Zeichnung näher erläutert.

Es zeigen:
- Fig. 1: schematisch einen Querschnitt durch ein freies Ende einer als Düse ausgebildeten erfindungsgemäßen Dosiervorrichtung, und
- Fig. 2: schematisch und beispielhaft eine Anordnung der erfindungsgemäßen Dosiervorrichtung im Abgasstrang einer Brennkraftmaschine.

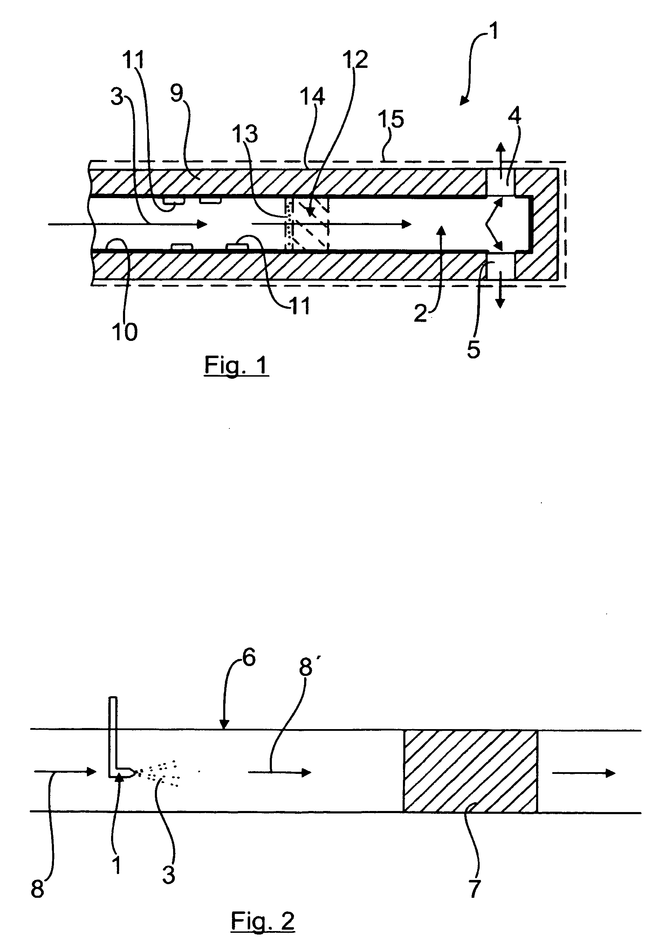

In der Fig. 1 ist schematisch und beispielhaft ein Querschnitt durch ein freies Ende einer als Düse 1 ausgebildeten Dosiervorrichtung gezeigt. Diese Düse 1 weist einen Zudosierkanal 2 auf, durch den die hier lediglich schematisch dargestellte wässrige Harnstofflösung als Reduktionsmittel 3 über die düsenendseitigen Düsenöffnungen 4, 5 als Austrittsöffnungen in einen Abgasstrang 6 (Fig. 2) zu vorgegebenen Zeiten in vorgegebenen Mengen zudosiert werden kann. Wie dies der Fig. 2 weiter entnommen werden kann, ragt die Düse 1 stromauf eines SCR-Katalysators 7 in den Abgasstrang 6 ein, so dass im Bereich zwischen der Düse 1 und dem SCR-Katalysator 7 eine Vermischung des Abgasstroms 8 mit dem Reduktionsmittel erfolgt und ein mit Reduktionsmittel beladener Abgasstrom 8' in den SCR-Katalysator 7 einströmt.

Die Düse 1 selbst ist folgendermaßen aufgebaut:

Eine Kanalwand 9 des Zudosierkanals 2 ist mit einer katalytisch aktiven Oberflächenschicht 10 aus einem katalytisch aktiven Material beschichtet, mittels dem Reduktionsmittelzersetzungsprodukte 11, wie sie lediglich äußerst schematisch und beispielhaft in der Fig. 1 dargestellt sind, gebunden und weiter zersetzt werden können. Dadurch wird die Gefahr reduziert, dass diese Reduktionsmittelzersetzungsprodukte 11, die aufgrund der hohen Temperaturen im Bereich des Zudosierkanals 2 z. B. aus dem Reduktionsmittel 3 gebildet werden können, die Düsenöffnungen 4, 5 verstopfen können. Die katalytisch aktive Oberflächenschicht 10 ist durch ein solches katalytisch aktives Material gebildet, das die Selektivität zur Bildung nicht ringförmiger und/oder nicht fester Reduktionsmittelzersetzungsprodukte im Vergleich zu ringförmigen und/oder festen Reduktionsmittelzersetzungsprodukten erhöht und/oder der Zersetzung der ringförmigen und/oder festen Reduktionsmittelzersetzungsprodukte dient.

Zusätzlich zu dieser katalytisch aktiven Oberflächenschicht 10 ist in einem vorgegebenen Abstand zu den Düsenöffnungen 4, 5 auch ein Filterelement 12 im Zudosierkanal 2 angeordnet, das hier lediglich schematisch und strichliert dargestellt ist. Dieses Filterelement 12 ist wiederum mit einer katalytisch aktiven Oberflächenschicht 13 aus bevorzugt dem gleichen Material wie die katalytisch aktive Oberflächenschicht 10 beschichtet. Grundsätzlich könnten aber auch unterschiedliche Aktivitätskomponenten für die Ausbildung der beiden Oberflächenschichten 10, 13 verwendet werden, um eine ggf. erforderliche unterschiedliche Selektivität einzustellen. Ein vorgesehenes Filterelement 12 bewirkt neben einer bevorzugten Zersetzung der Reduktionsmittelzersetzungsprodukte 11 zudem eine höhere Verweilzeit der Reduktionsmittelzersetzungsprodukte 11 im Bereich der katalytisch aktiven Oberflächenschicht 13, was den Zersetzungsprozess zudem begünstigt.

Gemäß einer weiteren bevorzugten Ausgestaltung kann, was in der Fig. 1 lediglich äußerst schematisch und strichliert dargestellt ist, zudem im Bereich der Düsenaußenwand 14 eine katalytisch aktive Oberflächenschicht 15 aus einem definierten katalytisch aktiven Material vorgesehen sein, und zwar wenigstens in demjenigen Düsenbereich, der in den Abgasstrang 6 einragt. Damit kann z. B. verhindert werden, dass sich bestimmte Feststoffe im Bereich der Düse 1 im Abgasstrang 6 anlagern, da diese dann mittels der katalytisch aktiven Oberflächenschicht 15 zersetzt werden können. Ebenso wird dadurch zuverlässig ein Verstopfen des z. B. SCR-Katalysators 7 durch das Abplatzen von festen Reduktionsmittelzersetzungsprodukten von der Düse zuverlässig vermieden.

## Patentansprüche

1. Dosiervorrichtung zur Zudosierung eines Reduktionsmittels, insbesondere für eine selektive katalytische Reduktion von Stickoxiden, in einen Abgasstrom einer Brennkraftmaschine, mit wenigstens einem Zudosierkanal, über den das Reduktionsmittel in einen Abgasstrom zudosierbar ist, wobei wenigstens innerhalb des Zudosierkanals (2) wenigstens eine katalytische aktive Oberfläche (10, 13) vorgesehen oder ausgebildet ist, die die Bildung von festen Reduktionsmittelzersetzungsprodukten unterdrückt und/oder die Zersetzung von festen Reduktionsmittelzersetzungsprodukten (11) begünstigt und/oder die Bildung von gasförmigen Reduktionsmittelzersetzungsprodukten fördert, wobei wenigstens ein im Zudosierkanal (2) angeordnetes Zwischenelement (12) wenigstens in Teilbereichen eine katalytisch aktive Oberfläche (10, 13) aufweist **dadurch gekennzeichnet, dass** das im Zudosierkanal (2) angeordnete Zwischenelement ein Filterelement (12) ist.

2. Dosiervorrichtung nach einem der vorhergehenden Ansprüche, **dadurch gekennzeichnet, dass** das Filterelement (12) in einem vorgegebenen Abstand stromauf wenigstens einer Auslassöffnung (4, 5) des Zudosierkanals angeordnet ist.

3. Dosiervorrichtung nach einem der vorhergehenden Ansprüche, **dadurch gekennzeichnet, dass** wenigstens Teilbereiche der Dosiervorrichtung vom Abgas der Brennkraftmaschine umströmt und/oder durchströmt werden.

4. Dosiervorrichtung nach einem der vorhergehenden Ansprüche, **dadurch gekennzeichnet, dass** wenigstens Teilbereiche der Dosiervorrichtung, die nicht abgasberührt sind, mit einer katalytisch aktiven Oberfläche versehen oder ausgebildet sind.

5. Dosiervorrichtung nach einem der vorhergehenden Ansprüche, **dadurch gekennzeichnet, dass** die Dosiervorrichtung (1) durch ein Dosierrohr gebildet ist, dessen Rohrinnenwand die Kanalwand (9) und damit den Zudosierkanal (2) ausbildet.

6. Dosiervorrichtung nach einem der vorhergehenden Ansprüche, **dadurch gekennzeichnet, dass** eine Rohraußenwand (14) des Dosierrohres wenigstens in Teilbereichen eine katalytisch aktive Oberfläche (15) für vorgegebene Stoffe aufweist, insbesondere in denjenigen Rohraußenwandbereichen die im montierten Zustand des Dosierrohrs in den Abgasstrom (8) einragen.

7. Dosiervorrichtung nach einem der vorhergehenden Ansprüche, **dadurch gekennzeichnet, dass** der wenigstens eine Zudosierkanal (2) als Düse ausgelegt und ausgebildet ist.

8. Dosiervorrichtung nach einem der vorhergehenden Ansprüche, **dadurch gekennzeichnet, dass** die Dosiervorrichtung (1) und/oder deren Bestandteile, insbesondere das im Zudosierkanal (2) aufgenommenes Filterelement (12), wenigstens bereichsweise aus einem katalytisch aktiven Material bestehen.

9. Dosiervorrichtung nach Anspruch 8, **dadurch gekennzeichnet, dass** das katalytisch aktive Material Bestandteil einer Legierung ist, insbesondere Bestandteil einer Legierung aus unterschiedlichen katalytisch aktiven Materialien ist.

10. Dosiervorrichtung nach Anspruch 8 oder 9, **dadurch gekennzeichnet, dass** die Dosiervorrichtung (1) und/oder deren Bestandteile, insbesondere das im Zudosierkanal (2) aufgenommenes Filterelement (12), wenigstens zum Teil aus Titan und/oder Aluminiumnitrat und/oder titanhaltigem Stahl aufgebaut ist.

11. Dosiervorrichtung nach einem der vorhergehenden Ansprüche, **dadurch gekennzeichnet, dass** die katalytisch aktive Oberfläche durch eine Beschichtung (10, 12, 15) vorgegebener Bereiche mit einem katalytisch aktiven Material ausgebildet ist, wobei bevorzugt vorgesehen ist, dass die katalytisch aktive Oberfläche durch Beschichtung mit Hilfe eines Washcoats und/oder durch Bedampfen und/oder Platinieren und/oder Eloxieren und/oder Imprägnieren hergestellt ist.

12. Dosiervorrichtung nach einem der vorhergehenden Ansprüche, **dadurch gekennzeichnet, dass** es sich bei den Aktivkomponenten um Elemente der Platinmetallgruppe und/oder Cer und/oder Vanadium und/oder Wolfram und/oder Titan und/oder Silizium und/oder Aluminium und/oder deren Oxide und/oder Zeolithe handelt.

13. Dosiervorrichtung nach einem der vorhergehenden Ansprüche, **dadurch gekennzeichnet, dass** die katalytisch aktive Oberfläche (10, 13, 15) durch ein solches katalytisch aktives Material gebildet ist, das, insbesondere im Bezug auf Harnstoff als Reduktionsmittel, die Selektivität zur Bildung nicht ringförmiger und/oder nicht fester, insbesondere gasförmiger, Reduktionsmittelzersetzungsprodukte im Vergleich zu ringförmigen und/oder festen Reduktionsmittelzersetzungsprodukten erhöht und/oder der Zersetzung der ringförmigen und/oder festen Reduktionsmittelzersetzungsprodukte dient.

## Claims

1. Metering device for metering a reduction agent, in particular for a selective catalytic reduction of nitrogen oxides, into an exhaust gas flow of an internal combustion engine, with at least one metering duct, via which the reduction agent can be metered into an exhaust gas flow, there being provided or formed at least inside the metering duct (2) at least one catalytically active surface (10, 13) which suppresses the formation of solid reduction agent decomposition products and/or assists the decomposition of solid reduction agent decomposition products (11) and/or promotes the formation of gaseous reduction agent decomposition products, at least one intermediate element (12) arranged in the metering duct (2) having, at least in subregions, a catalytically active surface (10, 13), **characterized in that** the intermediate element arranged in the metering duct (2) is a filter element (12).

2. Metering device according to one of the preceding claims, **characterized in that** the filter element (12) is arranged at a stipulated distance upstream of at least one outlet port (4, 5) of the metering duct.

3. Metering device according to one of the preceding claims, **characterized in that** the exhaust gas of the internal combustion engine flows around and/or flows through at least subregions of the metering device.

4. Metering device according to one of the preceding claims, **characterized in that** at least subregions of the metering device which are not touched by exhaust gas are provided or formed with a catalytically active surface.

5. Metering device according to one of the preceding claims, **characterized in that** the metering device (1) is formed by a metering tube, the tube inner wall of which forms the duct wall (9) and consequently the metering duct (2).

6. Metering device according to one of the preceding claims, **characterized in that** a tube outer wall (14) of the metering tube has, at least in subregions, a catalytically active surface (15) for stipulated substances, in particular in those tube outer wall regions which project into the exhaust gas flow (8) in the mounted state of the metering tube.

7. Metering device according to one of the preceding claims, **characterized in that** the at least one metering duct (2) is designed and formed as a nozzle.

8. Metering device according to one of the preceding claims, **characterized in that** the metering device (1) and/or its components, in particular the filter element (12) accommodated in the metering duct (2), consist at least in regions of a catalytically active material.

9. Metering device according to Claim 8, **characterized in that** the catalytically active material is a component of an alloy, in particular a component of an alloy consisting of different catalytically active materials.

10. Metering device according to Claim 8 or 9, **characterized in that** the metering device (1) and/or its components, in particular the filter element (12) accommodated in the metering duct (2), are constructed at least partially from titanium and/or aluminium nitrate and/or titanium-containing steel.

11. Metering device according to one of the preceding claims, **characterized in that** the catalytically active surface is formed by a coating (10, 12, 15) of stipulated regions with a catalytically active material, there preferably being provision for the catalytically active surface to be produced by coating with the aid of a wash coat and/or by vapour deposition and/or platinizing and/or anodizing and/or impregnation.

12. Metering device according to one of the preceding claims, **characterized in that** the active components are elements of the platinum metal group and/or cerium and/or vanadium and/or tungsten and/or titanium and/or silicon and/or aluminium and/or their oxides and/or zeolites.

13. Metering device according to one of the preceding claims, **characterized in that** the catalytically active surface (10, 13, 15) is formed by such a catalytically active material which, particularly with regard to urea as a reduction agent increases selectivity for forming non-cyclic and/or non-solid, in particular gaseous, reduction agent decomposition products in comparison to cyclic and/or solid reduction agent decomposition products and/or serves for decomposing the cyclic and/or solid reduction agent decomposition products.

## Revendications

1. Dispositif de dosage pour le dosage d'un agent réducteur, notamment pour une réduction catalytique sélective d'oxydes d'azote, dans un flux de gaz d'échappement d'un moteur à combustion interne, comprenant au moins un canal de dosage par le biais duquel l'agent réducteur peut être dosé dans un flux de gaz d'échappement, au moins une surface catalytiquement active (10, 13) étant prévue ou réalisée au moins à l'intérieur du canal de dosage (2), laquelle surface supprime la formation de produits de décomposition d'agents réducteurs et/ou favorise la décomposition de produits de décomposition d'agents réducteurs solides (11) et/ou aide la formation de produits de décomposition d'agents réducteurs gazeux, au moins un élément intermédiaire (12) disposé dans le canal de dosage (2) présentant au moins dans des régions partielles une surface catalytiquement active (10, 13), **caractérisé en ce que** l'élément intermédiaire disposé dans le canal de dosage (2) est un élément filtrant (12).

2. Dispositif de dosage selon l'une quelconque des revendications précédentes, **caractérisé en ce que** l'élément filtrant (12) est disposé à une distance prédéfinie en amont d'au moins une ouverture de sortie (4, 5) du canal de dosage.

3. Dispositif de dosage selon l'une quelconque des revendications précédentes, **caractérisé en ce qu'**au moins des régions partielles du dispositif de dosage sont parcourues ou entourées par le flux de gaz d'échappement du moteur à combustion interne.

4. Dispositif de dosage selon l'une quelconque des revendications précédentes, **caractérisé en ce qu'**au moins des régions partielles du dispositif de dosage qui ne sont pas en contact avec le gaz d'échappement sont pourvues de ou réalisées avec une surface catalytiquement active.

5. Dispositif de dosage selon l'une quelconque des revendications précédentes, **caractérisé en ce que** le dispositif de dosage (1) est formé par un tube de dosage dont la paroi intérieure de tube forme la paroi de canal (9) et donc le canal de dosage (2).

6. Dispositif de dosage selon l'une quelconque des revendications précédentes, **caractérisé en ce qu'**une paroi extérieure de tube (14) du tube de dosage présente au moins dans des régions partielles une surface catalytiquement active (15) pour des substances données, notamment dans les régions de la paroi extérieure de tube qui pénètrent dans le flux de gaz d'échappement (8) dans l'état monté du tube de dosage.

7. Dispositif de dosage selon l'une quelconque des revendications précédentes, **caractérisé en ce que** l'au moins un canal de dosage (2) est conçu et réalisé sous forme de buse.

8. Dispositif de dosage selon l'une quelconque des revendications précédentes, **caractérisé en ce que** le dispositif de dosage (1) et/ou ses constituants, notamment l'élément filtrant (12) reçu dans le canal de dosage (2), se composent au moins en partie d'un matériau catalytiquement actif.

9. Dispositif de dosage selon la revendication 8, **caractérisé en ce que** le matériau catalytiquement actif est un constituant d'un alliage, notamment un constituant d'un alliage constitué de matériaux différents catalytiquement actifs.

10. Dispositif de dosage selon la revendication 8 ou 9, **caractérisé en ce que** le dispositif de dosage (1) et/ou ses constituants, notamment l'élément filtrant (12) reçu dans le canal de dosage (2), est construit au moins en partie à partir de titane et/ou de nitrate d'aluminium et/ou d'acier contenant du titane.

11. Dispositif de dosage selon l'une quelconque des revendications précédentes, **caractérisé en ce que** la surface catalytiquement active est réalisée par un revêtement (10, 12, 15) de régions prédéfinies avec un matériau catalytiquement actif, la surface catalytiquement active étant fabriquée de préférence par revêtement à l'aide d'une couche de finition et/ou par vaporisation et/ou platinisation et/ou anodisation et/ou imprégnation.

12. Dispositif de dosage selon l'une quelconque des revendications précédentes, **caractérisé en ce que** les composants actifs sont des éléments des métaux du groupe du platine et/ou le cérium et/ou le vanadium et/ou le tungstène et/ou le titane e t/ou le silicium et/ou l'aluminium et/ou leurs oxydes et/ou des zéolithes.

13. Dispositif de dosage selon l'une quelconque des revendications précédentes, **caractérisé en ce que** la surface catalytiquement active (10, 13, 15) est formée par un matériau catalytiquement actif qui, notamment par rapport à l'urée en tant qu'agent réducteur, augmente la sélectivité pour la formation de produits de décomposition d'agents réducteurs non cycliques et/ou non solides, notamment gazeux, par comparaison avec des produits de décomposition d'agents réducteurs cycliques et/ou solides et/ou sert à la décomposition des produits de décomposition d'agents réducteurs cycliques et/ou solides.
